# EUROPEAN PATENT SPECIFICATION

(11) **EP 0 779 013 B1**
(45) Date of publication and mention of the grant of the patent: **08.09.2004**
(21) Application number: 96913561.5
(22) Date of filing: 10.05.1996
(51) Int. Cl.: H04Q 7/38

(54) **METHOD FOR GUIDING A USER OF A MOBILE STATION OF A CELLULAR RADIO SYSTEM AS WELL AS A SERVICE CENTRE FOR A TELECOMMUNICATIONS SYSTEM**
FÜHRUNGSVERFAHREN FÜR TEILNEHMERSTATIONBENUTZER EINES ZELLULAREN KOMMUNIKATIONSSYSTEMS SOWIE DIENSTLEISTUNGSZENTRUM FÜR TELEKOMMUNIKATIONSSYSTEM
PROCEDE DE GUIDAGE D'UN UTILISATEUR DE STATION MOBILE D'UN SYSTEME DE RADIOCOMMUNICATIONS CELLULAIRE ET CENTRE DE SERVICE D'UN SYSTEME DE TELECOMMUNICATIONS

(30) Priority: 10.05.1995 FI 952280
(43) Date of publication of application: 18.06.1997
(73) Proprietor: TeliaSonera Finland Oyj, 00510 Helsinki (FI)
(72) Inventor: SIMOLA, Olli, FIN-00820 Helsinki (FI); SANDMAN, Tom, FIN-00980 Helsinki (FI)
(74) Representative: Simmelvuo, Markku Kalevi
(86) International application number: PCT/FI1996/000264
(87) International publication number: WO 1996/036193

(56) References cited:
- WO-A-94/06221
- US-A- 5 003 317
- US-A- 5 208 756
- US-A- 5 428 546

## Description

The invention relates to a method for guiding the user of a mobile station of the cellular radio system. The invention relates also to a service centre of a telecommunications system, comprising means for establishing a connection to the mobile station of the cellular radio system as a response to the service request transmitted from the mobile station.

When travelling in an unfamiliar area, for instance in scattered settlement regions, it is often difficult because of the lack of local knowledge to find certain objects, for instance the service points located nearby. The situation becomes very problematic for instance in the case, when the service points are not located along the main road, but in small villages, past which the main road has been directed, or when even a chart is not available. In such cases it may sometimes be very difficult to find out for example a service station to get fuel replenishment. A chart carried with naturally makes the situation a bit easier, but even then an own location may be unclear and hence a problem. If own location is not clear, even portable mobile phone offers no substantial advantage after fuel has ended, because it is not possible to get the road service or corresponding unit to the site because of insufficient location knowledge, though the phone number of the road service unit is known.

Reference publication US 5,208,756 (D1) discloses an accurate vehicle locating and navigating system using a small location device being e.g. connectable to a cellular telephone. In the system the location unit itself or via the cellular telephone receives signals transmitted from a plurality of base stations and measures the strength of the signals. Furthermore, the identity of the base stations from which the signals are received, and the signals' transmitting power, can be determined from data transmitted with the signals. The location device is aware of the map coordinates of the identified base stations, therefore being able to determine the location coordinates of the vehicle using triangulation or arculation. The calculated location information is then transmitted digitally to a central station where the position of the vehicle is displayed on a computer screen along with a graphical representation of a map of the region served by the cellular telephone network.

Reference publication US 5,003,317 (D2) discloses a stolen vehicle recovery system in which a vehicle transmitter is disposed on each vehicle for cyclically transmitting a pulsed signal, which is modulated by a data stream comprising a verification code, a unique identity code associated with the vehicle. A central station comprises a plurality of remote direction finding receivers with which based on the received signal from a stolen vehicle the position of the vehicle is calculated using triangulation. A display computer at the central station provides a digitised street or terrain map display with the vehicle position and identity code being dynamically displayed thereon.

Both of the solutions of the aforementioned reference publications need additional equipment mounted in a vehicle in order to acquire the location of the vehicle. There is an obvious need for a solution, which does not need any additional equipment in order to locate and guide a user.

The object of this invention is to solve the above-mentioned problem and provide a method for guiding the user of a mobile station regardless the fact, whether he himself knows his location. This object is attained by the method according to the invention, which is characterized in that a call is set-up to a service centre with a mobile station, the call set-up request comprising a cell identification of the mobile station, whereby based on the received cell identification searching a chart with a terminal of the service centre, the chart covering the geographical area, in which the mobile station is located, and the user of the mobile station is guided based on the searched chart and on a service request acquired from the mobile station user via the set-up call.

A further object of the invention includes a service centre of a telecommunications system, which can be utilized for the realization of the method according to the invention. The service centre according to the invention is characterized in that it comprises means for reception of a cell identification of the mobile station along with a call set-up request, and for the presentation of a chart corresponding the cell identification as a response to the reception of the cell identification, whereby this chart covers the geographical area, where the mobile station is located, wherein the service centre has been connected via a data transmission connection to a local centre of a telephone network and adapted to receive the cell identification of cellular system from the telephone network, and wherein an application in a terminal of the service centre is activated in response to the call set-up request and the terminal collects the received cell identification via an interface between the service centre and the telephone network.

The invention is based on the idea, that when the cell identification receivable for the cell radio system is utilized to open a chart to the terminal screen, so that this chart covers the radio cell and its environment, where the mobile station is situated, the location of the mobile phone can be found and guidance can be given to the user of the phone according to the wishes of the user. Accuracy, by which the mobile station can be located, depends naturally on the size of the radio cells of the cellular radio system under operation. The location of the mobile station can typically be defined in population centres with the accuracy of about three kilometres and outside the population centres with the accuracy of about fifteen kilometres.

The guidance offered to user may include for instance the advice the operator of the service centre gives to him concerning the direction, to which the user of the mobile station user should go in order to reach the nearest gas station, where he can buy fuel. The operator of the service centre may alternatively inform the stray user of the mobile phone his location, whereafter the mobile phone user can by the chart carried by him find his location and the route from his location point to the desired place. The most substantial advantages of the method and the service centre according to the invention include therefore, that the user of the mobile phone can be guided regardless the' fact, whether the user initially knows his own location, that the operator of the service centre can guide the user of the mobile phone, though he himself has no local knowledge of the area, where the mobile phone is situated, because the information needed for the guidance is found in the chart to be opened by the cell code of the service centre, and that the invention can be utilized in connection with already existing cellular radio systems, so that the costs needed for the realization of the method according to the invention will be relatively low.

Preferable realization forms of the method and the service centre according to the invention are shown in the accompanying dependent claims 2 and 4 - 8.

The invention will be described in the following in detail as an example by a preferred embodiment of a service centre according to the invention with reference to the enclosed drawing, in which:
Figure 1 shows a block diagram of a part of the GSM-cellular radio system;
Figure 2 illustrates the first preferable embodiment of the service centre according to the invention.

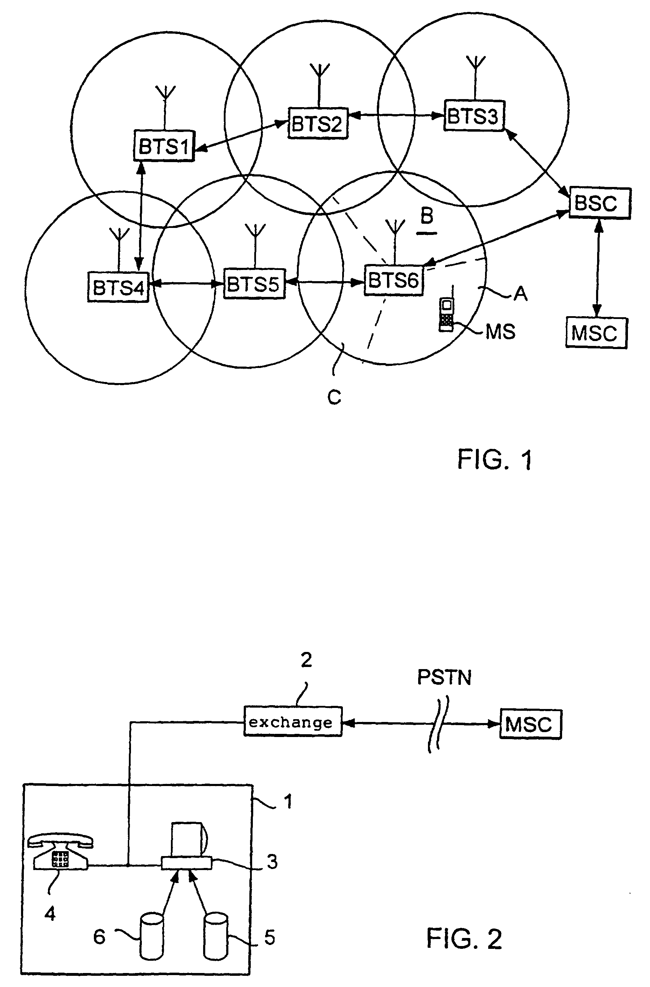

Figure 1 shows a block diagram of a part of the GSM-cellular radio system. In Fig. 1 it has been presented six base stations BTS1 - BTS6 (Base Transceiver stations), which all cover certain geographical area. Base stations BTS1 - BTS6 have been connected via a Base Station Controller BSC to the Mobile Services Switching Centre MSC, which in its part is connected with the public switched telephone network.

The geographical area covered by individual base stations may be divided into several sectors or radio cells as in the case of the base station BTS6. The area covered by the base station BTS 6 has been divided into three radio cells A, B and C, whereby in the case of Fig. 1 a mobile phone is placed to the radio cell A. The mobile phone centre MSC maintains the information known per se of the mobile phones locating in the geographical area covered by it, so that incoming calls could be directed to the mobile phones in question.

Cell identifications of mobile stations of a cellular radio system are transmitted for instance in the additional information field of the TUP-93 signalling call formation message or in a corresponding way, if in the system it is used something else than the TUP-93 signalling. The additional information field is included in the specification of the TUP-93 signalling. The contents of the additional information field include the cell identification described in the specifications of the cellular radio system concerned, which for instance for the GSM-system has been presented in the specifications GSM 08.08 (§3.2.2.17) and GSM 04.08 (§10.5.1.1 and §10.5.1.3). TUP-93 signalling has been described for instance in the publication "Kansallinen yhteiskanavamerkinantojärjestelmä, puhelinkäyttäjäosa TUP" (National Common-Channel Signalling System, telephone user part TUP), Telecom Finland Oy and Puhelinlaitosten Liitto (Association of Telephone Companies), Helsinki 1994, which is hereby included in this application as reference:

In the case of Fig. 1 for instance to the mobile phone centre MSC is therefore transmitted during the speech formation an information message, indicating that the mobile phone MS or the mobile phone's MS cell identification is situated in the cell A of the base station BTS6.

The GSM-system has been described in detail for instance in the book "The GSM Systems for Mobile Communications", M. Mouly and M-B. Pautet, Palaiseau, France, 1992, ISB.N:2-9507190-0-7, wherefore it is not described more closely in this connection.

Fig. 2 illustrates the first preferable embodiment of the service centre according to the invention. When a call is made by the mobile phone MS according to Fig. 1 to the service number of the service centre 1, the cell identification of the mobile phone MS is hereby transmitted to the mobile phone centre MSC. The mobile phone centre MSC transmits in its part the cell identification in question further to the public switched telephone network PSTN, through which it is sent unchanged to the local centre 2 according to Fig. 2. In this exemplary case the transmission of the cell identification via the telephone network requires that in all the connections between the centres, through which the call goes, TUP-93 signalling will be used.

The connection between the telephone exchange 2 and the service centre's work station (e.g. ISDN) has been realized so, that the cell identification can be transferred to the terminal 3. When a call comes to the service centre 1, a chart realization is activated from the operators data terminal 3, seeking the cell identification from the terminal's CTI-interface (Computer Telephone Integration). On the grounds of the received cell identification the terminal 3 searches from the memory means 5 the chart corresponding the cell identification concerned and recorded in digital form and opens this chart to the terminal display screen. The memory means 5 may consist for instance of a data set in the computer's hard disk or alternatively for example a CD-ROM disk.

Via the telephone 4 the operator can thereafter ask the user of the mobile station to describe the type of information he needs. If the user has gone astray, the operator may advise to which direction the mobile station user should go to reach the desired place.

If the mobile station user on the other hand needs information for example of the gas stations located nearby, the operator may search proper information to his display screen from the memory means 6. In the memory means 6, which may comprise for instance a file in the computer's hard disk, it is maintained information about the service providers situated in the area covered by certain radio cell. The operator can then, using the cell identification transmitted from the telephone network, search data concerning the gas stations located near the mobile station user. To the memory means 6 has been advantageously deposited information concerning among other things addresses, business hours, available services and telephone numbers of the nearby situated gas stations. If the mobile station user so desires, the operator may switch the user's call to the gas station he prefers.

It is to be understood, that the above description and the figures associated with it have the purpose only to illustrate the present invention. It is obvious to a person skilled in the art that different variations and modifications can be made to the invention without deviating from the scope thereof defined in the accompanying claims.

## Claims

1. Method for guiding a user of a mobile station (MS) of a cellular radio system,
**characterized in that**:
setting up a call to a service centre (1) with a mobile station (MS), the call set-up request comprising a cell identification of the mobile station (MS),
searching on the grounds of the received cell identification a chart with a terminal (3), the chart covering the geographical area, in which the mobile station (MS) is situated, and
guiding the mobile station (MS) user based on the searched chart and on a service request acquired from the mobile station (MS) user via the set-up call.

2. Method according to claim 1, **characterized in that** the guidance of the mobile station (MS) comprises data transmission to the mobile station (MS) user concerning the direction, to which the user should go in order to reach the desired place.

3. Service centre (1) of a telecommunications system, comprising means (4) for establishing a connection to a mobile station (MS) in a cellular radio system as a response to a call set-up request transmitted from the mobile station (MS),
**characterized in that**:
the service centre (1) comprises means (3,5) for reception of a cell identification of the mobile station (MS) along with the call set-up request, and for presentation of the chart corresponding the cell identification as the response to the reception of the cell identification, whereby said chart covers the geographical area, in which the mobile station (MS) is located,
wherein the service centre (1) has been connected via a data transmission connection to a local centre (2) of a telephone network and adapted to receive the cell identification of cellular system from the telephone network, and
wherein an application in a terminal (3) of the service centre (1) is activated in response to the call set-up request and the terminal (3) collects the received cell identification via an interface between the service centre (1) and the telephone network.

4. Service centre according to claim 3, **characterized in that** the interface between the terminal (3) and the telephone network is CTI.

5. Service centre according to claim 3, **characterized in that** the service centre (1) has been connected to the local centre (2) via an ISDN connection.

6. Service centre according to claim 3, **characterized in that** the service centre (1) comprises further means (6) to present information concerning the service providers located in the geographical area covered by the chart presented by a display device (3).

7. Service centre according to claim 6,
**characterized in that** the service centre (1) comprises further means (3) to establish a connection between the service provider located in the area covered by the chart and the mobile station (MS), according to the mobile station (MS) user.

8. Service centre according to any of the preceding claims 3 - 7, **characterized in that** the service centre (1) has been connected via ISDN connection to the local centre (2) of the telephone network, the local centre (2) being adapted to receive the cell identification from the telephone network and to transfer it further to the service centre (1) in the additional information field of the call formation message according to the TUP-93 signalling.

## Patentansprüche

1. Verfahren zur Führung eines Nutzers einer Mobilstation (MS) eines zellularen Funksystems,
**dadurch gekennzeichnet, dass**:
ein Ruf zu einem Service-Center (1) mit einer Mobilstation (MS) aufgebaut wird, wobei die Rufaufbauanfrage eine Zellenidentifikation der Mobilstation (MS) umfasst,
eine Karte mit einem Terminal (3) auf Grundlage der empfangenen Zellenidentifikation gesucht wird, wobei die Karte das geographische Gebiet abdeckt, in dem sich die Mobilstation (MS) befindet, und dass
der Nutzer der Mobilstation (MS) auf Basis der gesuchten Karte und einer Service-Anfrage, die über den Ruf zum Rufaufbau vom Nutzer der Mobilstation (MS) erhalten wurde, geführt wird.

2. Verfahren nach Anspruch 1, **dadurch gekennzeichnet, dass** die Führung der Mobilstation (MS) eine Datenübertragung zum Nutzer der Mobilstation (MS) bezüglich der Richtung umfasst, in die sich der Nutzer bewegen sollte, um den gewünschten Ort zu erreichen.

3. Service-Center (1) eines Telekommunikationssystems, umfassend eine Einrichtung (4) zur Herstellung einer Verbindung zu einer Mobilstation (MS) in einem zellularen Funksystem als eine Antwort auf eine von der Mobilstation (MS) übertragene Rufaufbauanfrage,
**dadurch gekennzeichnet, dass**:
das Service-Center (1) eine Einrichtung (3, 5) zum Empfangen einer Zeltenidentifikation der Mobilstation (MS) zusammen mit der Rufaufbauanfrage und zur Darstellung der Karte entsprechend der Zellenidentifikation als die Antwort auf den Empfang der Zellenidentifikation umfasst, wobei besagte Karte das geographische Gebiet abdeckt, in dem sich die Mobilstation (MS) befindet,
wobei das Service-Center (1) über eine Datenübertragungsverbindung mit einem lokalen Center (2) eines Telefonnetzes verbunden und dafür ausgebildet ist, die Zellenidentifikation des zellularen Systems vom Telefonnetz zu empfangen, und
wobei eine Anwendung in einem Terminal (3) des Service-Centers (1) als Antwort auf die Rufaufbauanfrage aktiviert wird und das Terminal (3) die empfangene Zellenidentifikation über eine Schnittstelle zwischen dem Service-Center (1) und dem Telefonnetz erfasst.

4. Service-Center nach Anspruch 3,
**dadurch gekennzeichnet, dass** die Schnittstelle zwischen dem Terminal (3) und dem Telefonnetz mit CTI realisiert ist.

5. Service-Center nach Anspruch 3,
**dadurch gekennzeichnet, dass** das Service-Center (1) über eine ISDN-Verbindung mit dem lokalen Center (2) verbunden ist.

6. Service-Center nach Anspruch 3,
**dadurch gekennzeichnet, dass** das Service-Center (1) eine weitere Einrichtung (6) umfasst, um Information bezüglich der Service-Anbieter in dem geographischen Gebiet darzustellen, das von der durch eine Anzeigevorrichtung (3) dargestellten Karte abgedeckt ist.

7. Service-Center nach Anspruch 6,
**dadurch gekennzeichnet, dass** das Service-Center (1) eine weitere Einrichtung (3) umfasst, um eine Verbindung zwischen dem Service-Anbieter in dem von der Karte abgedeckten Gebiet und der Mobilstation (MS) dem Nutzer der Mobilstation (MS) entsprechend herzustellen.

8. Service-Center nach einem der vorhergehenden Ansprüche 3-7,
**dadurch gekennzeichnet, dass** das Service-Center (1) über eine ISDN-Verbindung mit dem lokalen Center (2) des Telefonnetzes verbunden ist, wobei das lokale Center (2) dafür ausgebildet ist, die Zellenidentifikation von dem Telefonnetz zu empfangen und sie in dem zusätzlichen Informationsfeld der Rufformierungsnachricht gemäß der TUP-93-Signalübertragung an den Service-Center (1) weiter zu übertragen.

## Revendications

1. Procédé pour guider un utilisateur d'une station mobile (MS) d'un système radio cellulaire,
**caractérisé par** :
l'établissement, par une station mobile (MS), d'un appel vers un centre de service (1), la demande d'établissement d'appel comprenant une identification de cellule de la station mobile (MS),
la recherche, sur la base de l'identification de cellule reçue, d'une carte à l'aide d'un terminal (3), la carte couvrant la zone géographique dans laquelle la station mobile (MS) est située, et
le guidage de l'utilisateur de la station mobile (MS) sur la base de la carte recherchée et d'une demande de service obtenue de l'utilisateur de la station mobile (MS) par l'intermédiaire de l'appel établi.

2. Procédé selon la revendication 1, **caractérisé en ce que** le guidage de la station mobile (MS) comprend la transmission de données à l'utilisateur de la station mobile (MS) concernant la direction dans laquelle l'utilisateur devrait aller afin d'atteindre le lieu souhaité.

3. Centre de service (1) d'un système de télécommunication, comprenant des moyens (4) pour établir une connexion avec une station mobile (MS) dans un système radio cellulaire en tant que réponse à une demande d'établissement d'appel transmise par la station mobile (MS),
**caractérisé en ce que** :
le centre de service (1) comprend des moyens (3, 5) pour la réception d'une identification de cellule de la station mobile (MS) avec la demande d'établissement d'appel, et pour la présentation de la carte correspondant à l'identification de cellule en tant que réponse à la réception de l'identification de cellule, moyennant quoi ladite carte couvre la zone géographique dans laquelle la station mobile (MS) est située,
dans lequel le centre de service (1) a été connecté, par l'intermédiaire d'une connexion de transmission de données, à un centre local (2) d'un réseau téléphonique et adapté pour recevoir, du réseau téléphonique, l'identification de cellule de système cellulaire, et
dans lequel une application dans un terminal (3) du centre de service (1) est activée en réponse à la demande d'établissement d'appel et le terminal (3) recueille l'identification de cellule reçue par l'intermédiaire d'une interface entre le centre de service (1) et le réseau téléphonique.

4. Centre de service selon la revendication 3,
**caractérisé en ce que** l'interface entre le terminal (3) et le réseau téléphonique est une interface CTI.

5. Centre de service selon la revendication 3,
**caractérisé en ce que** le centre de service (1) a été connecté au centre local (2) par l'intermédiaire d'une connexion ISDN.

6. Centre de service selon la revendication 3,
**caractérisé en ce que** le centre de service (1) comprend, en outre, des moyens (6) pour présenter des informations concernant les fournisseurs de service situés dans la zone géographique couverte par la carte présentée par un dispositif d'affichage (3).

7. Centre de service selon la revendication 6,
**caractérisé en ce que** le centre de service (1) comprend, en outre, des moyens (3) pour établir une connexion entre le fournisseur de service situé dans la zone couverte par la carte et la station mobile (MS), conformément à l'utilisateur de la station mobile (MS).

8. Centre de service selon l'une quelconque des revendications précédentes 3 à 7, **caractérisé en ce que** le centre de service (1) a été connecté, par l'intermédiaire d'une connexion ISDN, au centre local (2) du réseau téléphonique, le centre local (2) étant adapté pour recevoir l'identification de cellule du réseau téléphonique et pour la transférer, en outre, au centre de service (1) dans le champ d'informations supplémentaire du message de formation d'appel conformément à la signalisation TUP-93.
